# EUROPEAN PATENT SPECIFICATION

(11) **EP 3 940 999 B1**
(45) Date of publication and mention of the grant of the patent: **08.11.2023**
(21) Application number: 20823357.7
(22) Date of filing: 11.03.2020
(51) Int. Cl.: H04L 12/40, B60R 16/023

(54) **ONBOARD NETWORK SYSTEM**
BORDNETZWERKSYSTEM
SYSTÈME DE RÉSEAU EMBARQUÉ

(30) Priority: 10.06.2019 JP 2019108201
(43) Date of publication of application: 19.01.2022
(73) Proprietor: MAZDA MOTOR CORPORATION, Hiroshima 730-8670 (JP)
(72) Inventor: KUROKAWA, Yoshimasa, Aki-gun, Hiroshima 730-8670 (JP); YAMASHITA, Tetsuhiro, Aki-gun, Hiroshima 730-8670 (JP)
(74) Representative: Behr, Wolfgang
(86) International application number: PCT/JP2020/010623
(87) International publication number: WO 2020/250516

(56) References cited:
- CN-B- 106 302 064
- JP-A- 2013 038 711
- JP-A- 2014 078 119
- JP-A- 2016 063 236
- US-A- 5 090 012
- US-A1- 2009 073 874
- US-A1- 2012 173 905
- US-A1- 2015 113 328

## Description

### TECHNICAL FIELD

The present disclosure belongs to the technical field related to an on-board network system.

### BACKGROUND ART

Japanese Unexamined Patent Application Publication No. JP 2017-061278 discloses providing a plurality of domains divided in accordance with the functions of on-board devices, and a plurality of domain controllers for the respective domains, and controlling the domain controllers using an integrated controller. According to Patent Document 1, for example, unit controllers are achieved by one or more ECUs, which are connected by a hierarchical network.

US 2012/0173905 A1 shows a network comprising a bridge-routing module that selects an alternate path in accordance with a predetermined network topology when a link failure occurs.
CN 106302064B shows a data transmission method for a dual channel redundant CAN bus for an electric vehicle.
US 2009/0073874 A1 shows a ring redundant communication path control method.

### SUMMARY OF THE INVENTION

### TECHNICAL PROBLEM

For example, a part of the network path may be disturbed in the configuration according to JP 2017-061278. In this case, the communications from the integrated controller or the domain controllers to the ECUs that control the on-board devices may be jammed.

The present disclosure was made in view of the problem. It is an objective of the present disclosure to reduce the loss of main functions at a disturbance of a part of an on-board network.

### SUMMARY OF THE INVENTION

The present invention is defined in the appended independent claim 1 to which reference should be made. Advantageous features are set out in the appended dependent claims.

### ADVANTAGES OF THE INVENTION

As described above, according to the technology disclosed herein, each of the control devices is communicative with the main arithmetic unit and/or other one(s) of the control devices via at least two communication paths, and adjusts the traffic in accordance with the priority order according to the type of the communication data. At a communication disturbance in one of the communication paths of the on-board network, the loss of the main functions can thus be reduced.

### BRIEF DESCRIPTION OF THE DRAWINGS

FIG. 1 is a block diagram showing a schematic configuration of a power supply topology of a vehicle.
FIG. 2 is a block diagram showing an example of a power supply topology within a power supply zone at the left front of the vehicle.
FIG. 3 is a block diagram showing another example of the power supply topology within the power supply zone at the left front of the vehicle.
FIG. 4 is a block diagram showing further another example of the power supply topology within the power supply zone at the left front of the vehicle.

### DESCRIPTION OF EMBODIMENT

An exemplary embodiment will now be described in detail with reference to the drawings.

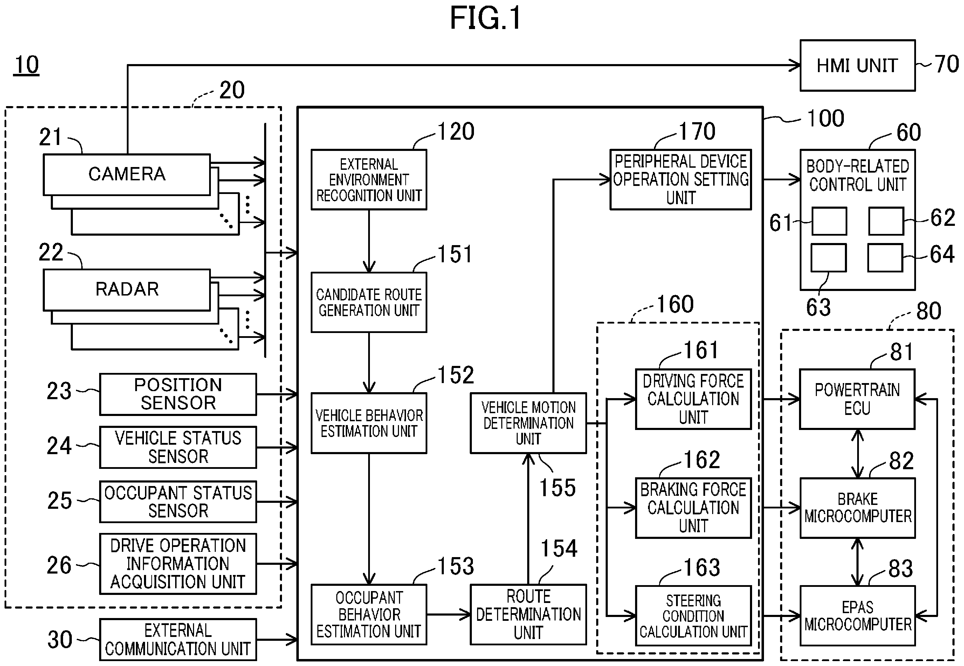

FIG. 1 is a block diagram schematically showing a configuration of a control system of a vehicle 10 according to the present embodiment. The vehicle 10 allows assisted driving and autonomous driving.

To achieve the assisted driving and autonomous driving, the vehicle 10 of the present embodiment includes an arithmetic unit 100 that calculates a route to be traveled by the vehicle 10 and determines motions of the vehicle 10 so that the vehicle 10 follows the route, based on outputs from sensing devices 20 and/or on information from a network outside the vehicle. The arithmetic unit 100 is a microprocessor configured by one or more chips, and includes a CPU, and a memory, for example. Note that FIG. 1 mainly shows a configuration to exert the route generating function of the present embodiment, and does not necessarily show all the functions the arithmetic unit 100 has. The arithmetic unit 100 is an example of the main arithmetic unit.

The sensing devices 20 that output information to the arithmetic unit 100 include, for example, (1) a plurality of cameras 21, (2) a plurality of radars 22, (3) a position sensor 23, (4) a vehicle status sensor 24, (5) an occupant status sensor 25, and (6) a driving operation information acquisition unit 26. The cameras 21 are arranged on the body or other parts of the vehicle 10 and capture images of the vehicle external environment. The radars 22 are arranged on the body or other parts of the vehicle 10 and detect objects, for example, outside the vehicle. The position sensor 23 detects the position of the vehicle 10 (i.e., obtains vehicle position information) utilizing a global positioning system (GPS). The vehicle status sensor 24 includes outputs of sensors such as a vehicle speed sensor, an acceleration sensor, and a yaw rate sensor, detecting the behavior of the vehicle, and obtains the information on the conditions of the vehicle 10. The occupant status sensor 25 includes in-vehicle cameras, for example, and obtains the information on the conditions of an occupant(s). The driving operation information acquisition unit 26 is for detecting the drive operation of the driver. In addition, the arithmetic unit 100 receives communication information from another vehicle around the subject vehicle 10 and/or traffic information from a navigation system through an external communication unit 30 connected to a network outside the vehicle.

The cameras 21 are arranged to image the surroundings of the vehicle 10 at 360° in the horizontal direction. Each of the cameras 21 outputs the image data generated to the arithmetic unit 100. The image data obtained by each camera 21 is input not only to the arithmetic unit 100, but also to a human machine interface (HMI) unit 70. The HMI unit 70 displays information based on the image data obtained, on a display device or the like in the vehicle.

Like the cameras 21, the radars 22 are arranged so that the detection range covers 360° of the vehicle 10 in the horizontal direction. The type of the radars 22 is not particularly limited. For example, millimeter wave radars or infrared radars are applicable.

The arithmetic unit 100 determines a target motion of the vehicle 10 based on outputs from the sensing devices 20, such as the cameras 21 and the radars 22, and/or on information received from a network outside the vehicle, calculates a driving force, a braking force, and steering amounts for realizing the determined target motion, and outputs the results of the calculation to a control unit 80 that controls an engine, a brake, or the like.

Specifically, in order to set the target motion of the vehicle 10, the arithmetic unit 100 includes an external environment recognition unit 120, a candidate route generation unit 151, a vehicle behavior estimation unit 152, an occupant behavior estimation unit 153, a route determination unit 154, a vehicle motion determination unit 155, and a physical amount calculation unit 160. The external environment recognition unit 120 recognizes the vehicle external environment based on the outputs from the sensing devices 20 such as the cameras 21 and/or the information input from the external communication unit 30. The candidate route generation unit 151 calculates one or more candidate routes that can be traveled by the vehicle 10 in accordance with the vehicle external environment recognized by the external environment recognition unit 120. The vehicle behavior estimation unit 152 estimates the behavior of the vehicle 10 based on the outputs from a vehicle status sensor 34. The occupant behavior estimation unit 153 estimates the behavior of the occupant(s) of the vehicle 10 based on the outputs from an occupant status sensor 35. The route determination unit 154 determines the route to be traveled by the vehicle 10. The vehicle motion determination unit 155 determines the target motion of the vehicle for following the route set by the route determination unit 154. The physical amount calculation unit 160 calculates the driving force, the braking force, and the steering amounts for achieving the target motion.

The external environment recognition unit 120 recognizes what an object outside the vehicle is, based on the image data received from the cameras 21 and/or the peak list of reflected waves received from the radars 22, for example. For example, the external environment recognition unit 120 detects an object outside the vehicle based on the image data and/or the peak list and identifies the object outside the vehicle, using identification information or other information in a database or the like stored in the arithmetic unit 100.

The external environment recognition unit 120 compares three-dimensional information around the vehicle 10 with an external environment model based on the information on the recognized objects outside the vehicle to recognize the vehicle external environment including roads and obstacles and create a map. The external environment recognition unit 120 recognizes the roads, obstacles, and other objects with respect to the three-dimensional information around the vehicle, and identifies a free space, that is, an area without any object, based on the information on the recognized objects outside the vehicle. Used in this processing is a learned model that is an external environment model trained by deep learning, for example. The external environment recognition unit 120 generates a two-dimensional map representing the free space and combines the generated two-dimensional map with the positioning information on the objects to generate the three-dimensional map representing the surroundings of the vehicle 10. In this process, information on the installation positions and imaging directions of the cameras 21, and information on the installation positions and the transmission directions of the radars 22 are used. The external environment recognition unit 120 compares the generated three-dimensional map with the external environment model to recognize the vehicle external environment including roads and obstacles and outputs the results of the recognition to the candidate route generation unit 151. In the deep learning, a multilayer neural network (e.g., a deep neural network (DNN)) is used, for example. An example of the multilayer neural network is convolutional neural network (CNN).

The candidate route generation unit 151 generates the candidate routes that can be traveled by the vehicle 10 based on the outputs of the external environment recognition unit 120, the outputs of the position sensor 23, the information received from an external network, for example, via the external communication unit 30, for example.

The vehicle behavior estimation unit 152 measures the conditions of the vehicle, from the outputs of the sensors, such as the vehicle speed sensor, the acceleration sensor, and the yaw rate sensor, detecting the behavior of the vehicle. The vehicle behavior estimation unit 152 generates a six-degrees-of-freedom (i.e., 6DoF) model of the vehicle indicating the behavior of the vehicle.

The occupant behavior estimation unit 153 particularly estimates the driver's health conditions and emotion from the results of the detection of the occupant status sensor 25. Examples of the health conditions include good condition, slightly tired condition, poor condition, and less conscious condition. Examples of the emotions include fun, normal, bored, annoyed, and uncomfortable emotions.

The route determination unit 154 determines the route to be traveled by the vehicle 10 based on the outputs from the occupant behavior estimation unit 153. If only one route is generated by the candidate route generation unit 151, the route determination unit 154 determines this route as the route to be traveled by the vehicle 10. If the candidate route generation unit 151 generates a plurality of routes, a route that an occupant (in particular, the driver) feels most comfortable with, that is, a route that the driver does not perceive as a redundant route, such as a route too cautiously avoiding obstacles, is selected out of the plurality of candidate routes, in consideration of an output from the occupant behavior estimation unit 153.

The vehicle motion determination unit 155 determines a target motion for the traveling route determined by the route determination unit 154. The target motion means steering and acceleration/deceleration for following the traveling route. In addition, with reference to the 6DoF model of the vehicle, the vehicle motion determination unit 155 calculates the motion of the vehicle body for the traveling route selected by the route determination unit 154.

The physical amount calculation unit 160 calculates the driving force, the braking force, and the steering amounts for achieving the target motion, and includes a driving force calculation unit 161, a braking force calculation unit 162, and a steering amount calculation unit 163. To achieve the target motion, the driving force calculation unit 161 calculates the target driving force to be generated by the powertrain device (the engine and the transmission). To achieve the target motion, the braking force calculation unit 162 calculates the target braking force to be generated by the brake system. To achieve the target motion, the steering amount calculation unit 163 calculates the target steering amounts to be generated by the steering device.

The arithmetic unit 100 further includes a peripheral device operation setting unit 170 that sets operations of body-related devices of the vehicle 10, such as lamps and doors, based on outputs from the vehicle motion determination unit 155.

The results of the calculation by the arithmetic unit 100 are output to the control unit 80 and a body-related control unit 60.

The control unit 80 includes a powertrain ECU 81, a brake microcomputer 82, and an EPAS microcomputer 83. Specifically, information related to the target driving force calculated by the driving force calculation unit 161 is input to the powertrain ECU 81. Information related to the target braking force calculated by the braking force calculation unit 162 is input to the brake microcomputer 82. Information related to the target steering amounts calculated by the steering amount calculation unit 163 is input to the EPAS microcomputer 83. Information on the respective operations of the body-related devices set by the peripheral device operation setting unit 170 is input to the body-related control unit 60. The powertrain ECU 81, the brake microcomputer 82, and the EPAS microcomputer 83 are examples of the control devices. Specifically, the powertrain ECU 81, the brake microcomputer 82, and the EPAS microcomputer 83 are examples of the third, first, and second control devices, respectively.

Although not shown in detail, the powertrain ECU 81 basically calculates the timing of the fuel injection by injectors and timing of ignition by spark plugs to achieve the target driving force, and outputs control signals to these traveling devices. The brake microcomputer 82 basically calculates the controlled variables of an brake actuator to achieve the target braking force, and outputs control signals to the brake actuator. The EPAS microcomputer 83 basically calculates the amount of current to be supplied to the EPAS device to achieve the target steering amounts, and outputs control signals to the EPAS device.

The body-related control unit 60 includes a plurality of microcomputers corresponding to the body-related devices to control the respective devices. In the present embodiment, as the microcomputers included in the body-related control unit 60, a light control microcomputer 61 for controlling lights, a wiper control microcomputer 62 for controlling windshield wipers, a left door control microcomputer 63 for controlling a left door(s), and a right door control microcomputer 64 for controlling a right door(s) are exemplified. However, the body-related control unit 60 is not limited thereto. The light control microcomputer 61, the wiper control microcomputer 62, the left door control microcomputer 63, and the right door control microcomputer 64 are examples of the control devices.

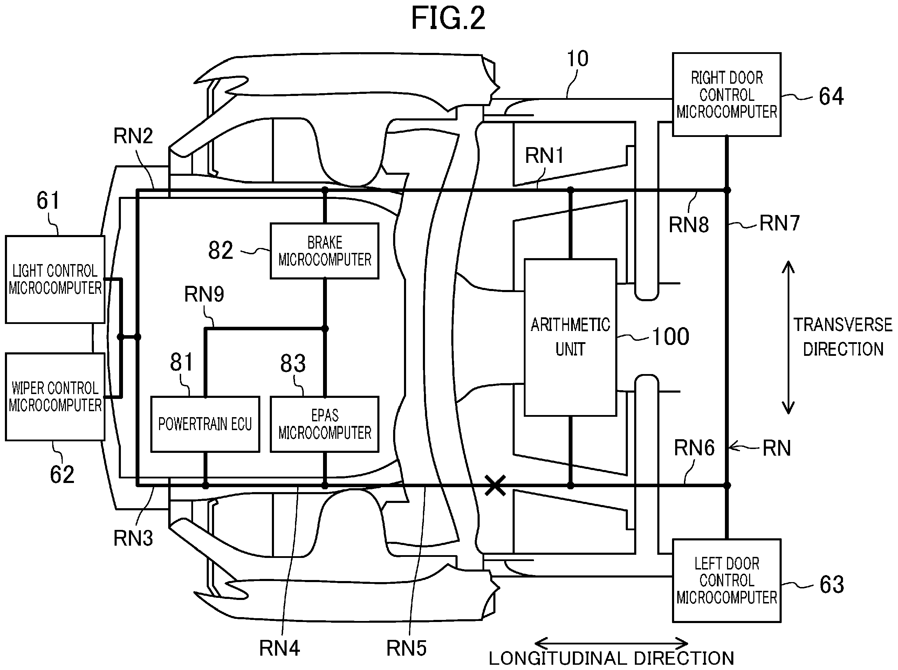

FIG. 2 shows an example connection between the arithmetic unit 100 and each of the microcomputers 61 to 64 and 81 to 83 of the body-related control unit 60 and the control unit 80, respectively. In other words, the figure shows a configuration example of a network system including the arithmetic unit 100, the body-related control unit 60, and the control unit 80. In FIG. 2, the arithmetic unit 100 and the microcomputers 61 to 64 and 81 to 83 are connected to a ring-like network. For this connection, wire harnesses or other means are used. Hubs for forming the network are neither shown in FIG. 2 nor described in the present embodiment. In FIG. 2, for the sake of simplicity, reference character RN1 represents the communication path between the arithmetic unit 100 and the brake microcomputer 82 in the ring-like communication path RN. Similarly, RN2 represents the communication path between (i) the brake microcomputer 82 and (ii) the light control microcomputer 61 and the wiper control microcomputer 62. RN3 represents the communication path between (i) the light control microcomputer 61 and the wiper control microcomputer 62 and (ii) the powertrain ECU 81. RN4 represents the communication path between the powertrain ECU 81 and the EPAS microcomputer 83. RN5 represents the communication path between the EPAS microcomputer 83 and the arithmetic unit 100. RN6 represents the communication path between the arithmetic unit 100 and the left door control microcomputer 63. RN7 represents the communication path between the left door control microcomputer 63 and the right door control microcomputer 64. RN8 represents the communication path between the right door control microcomputer 64 and the arithmetic unit 100.

The powertrain ECU 81, the brake microcomputer 82, and the EPAS microcomputer 83 are connected to each other via the communication path RN9, share information related to the controlled variables of the traveling devices, and allow control causing these devices to cooperate with each other.

In FIG. 2, the communication path from the arithmetic unit 100 through the brake microcomputer 82 and the EPAS microcomputer 83 back to the arithmetic unit 100 is an example of the ring-like communication path. Specifically, the ring-like communication path including the communication path RN1, a part of the communication path RN9, and the communication path RN5 is an example of the ring-like communication path. In addition, the communication path branching off from the communication path for connection between the brake microcomputer 82 and the EPAS microcomputer 83 together, passing through the powertrain ECU 81, and connected to the communication path RN5 is an example of the branched communication path.

Thus, for example, while a road surface is slippery, the need arises to reduce the rotation of the wheels (to perform so-called traction control) to prevent the wheels from spinning. To reduce the spinning of the wheels, the output of the powertrain may be reduced, or the braking force of the brake system may be used. However, since the powertrain ECU 81 and the brake microcomputer 82 are communicative with each other, a suitable measure can be taken utilizing both of the powertrain and the brake system. Further, for example, in cornering of the vehicle 10, the controlled variables of the powertrain and the brake system (including the DSC device) are finely adjusted in accordance with the target steering amounts, whereby rolling and pitching in which the front of the vehicle 10 sinks are generated in synchronization with each other, and the diagonal roll posture can be generated. The generated diagonal rolling increases the load applied to the outer front wheels, allowing the vehicle to corner at a small steering amount and reducing the rolling resistance to the vehicle 10.

As shown in FIG. 2, the arithmetic unit 100 and each of the microcomputers 61 to 64 and 81 to 83, and pairs of the microcomputers 61 to 64 and 81 to 83 are connected to each other via at least two communication paths. For example, the arithmetic unit 100 and the brake microcomputer 82 are connected to each other via the communication path passing through the communication paths RN5, RN4, RN3, and RN2 in addition to the communication path RN1 described above. For example, the arithmetic unit 100 and the light control microcomputer 61 are connected to each other via the communication path passing through the communication paths RN1 and RN2 and the communication path passing through the communication paths RN5, RN4, and RN3. For example, the powertrain ECU 81 and the brake microcomputer 82 are connected to each other via the communication path passing through the communication paths RN2 and RN3 in addition to the communication path RN9 described above.

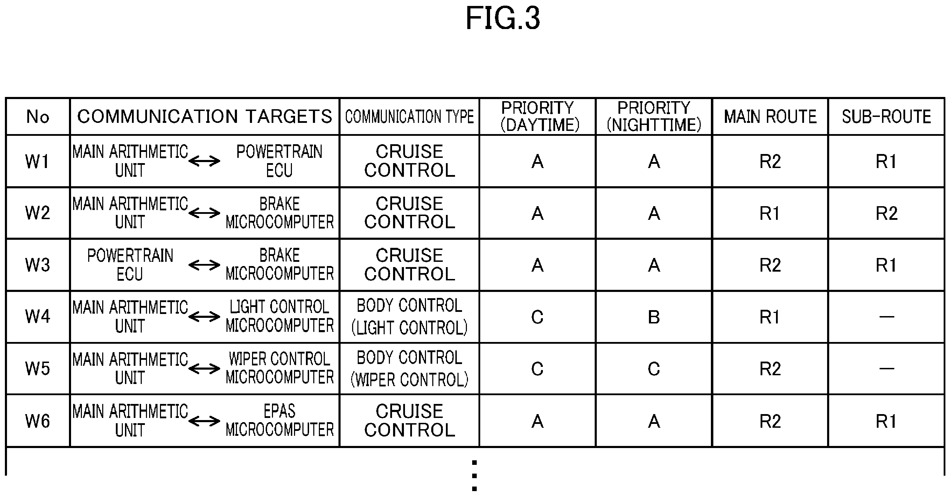

As shown in FIG. 3, in the network system, the priority order according to communication types is set in advance for the communications between the arithmetic unit 100 and each of the microcomputers 61 to 64 and 81 to 83 and between pairs of the microcomputers 61 to 64 and 81 to 83.

Here, the priority order is set based on, for example, the control type, the importance of the communication content, the degree of influence in case of thinning, the degree of contribution to the safety, and whether the recovery is possible without information. More specifically, for example, the priority order according to the control type is set, in order from the highest priority, cruise control, control related to advanced driver-assistance systems (ADAS), control related to the body such as wipers and lights, and control of entertainment devices such as audio equipment. Among the cruise controls, the braking control (i.e., the stop operation of the vehicle) has the highest priority, and the steering control (i.e., the turning operation of the vehicle) and the drive control (i.e., the travel operation of the vehicle) have the second highest priority. Among the ADAS-related controls, the control related to braking such as automatic braking has the highest priority, and the control related to steering and the control related to driving have the second highest priority. With respect to the priorities of the sensing devices 20, the communications of the sensing devices 20 influencing the control performance of the vehicle 10 have a higher priority. For example, assume that the cameras 21 and the radars 22 effectively perform, in collaboration, the ADAS-related control which is provided even at a disturbance of the communications of one of the cameras 21 or the radars 22. In this case, a higher priority is set to the communications with one of the sensors of the cameras 21 or the radars 22 whose performance may deteriorate at a higher degree.

In FIG. 3, reference characters "A", "B", and "C" are assigned in descending order of the priority. In the following description, the arithmetic unit 100 and the microcomputers 61 to 64 and 81 to 83 may be collectively and simply referred to as "control devices" for the sake of simplicity. Communications between the arithmetic unit 100 and each of the microcomputers 61 to 64 and 81 to 83 or communications between pairs of the microcomputers 61 to 64 and 81 to 83 may be collectively and simply referred to as "communications between the control devices".

For example, in FIG. 3, the row W1 shows, among the communications between the arithmetic unit 100 and the powertrain ECU 81, the priority order of the communication type "cruise control". The "cruise control" is related to the traveling of the vehicle 10, such as the driving force, the braking force, and the steering amounts. Among the controls of the vehicle 10, the "cruise control" has a significantly high priority which is thus set to "A". As the communications other than the "cruise control", update information on software by over-the-air (OTA) programming may be transmitted, for example.

Similarly, A is set, as the priority representing the importance of the communications, to the communications for the "cruise control" between the arithmetic unit 100 and the brake microcomputer 82 (see the row W2), the communications for the "cruise control" between the powertrain ECU 81 and the brake microcomputer 82 (see the row W3), and the communications for the "cruise control" between the arithmetic unit 100 and the EPAS microcomputer 83 (see the row W6).

On the other hand, the communications for the body-related controls, for example, the "wiper control" between the arithmetic unit 100 and the wiper control microcomputer 62 have a lower priority than those for the "cruise control". The priority is thus set to "C" (see the row W5). Similarly, the communications for the "light control", which is one of the body-related controls, between the arithmetic unit 100 and the light control microcomputer 61 have a lower priority than those for the "cruise control" (see the row W4). However, the "light control" in nighttime driving has a higher priority than the "wiper control" in view of the safety. Accordingly, the "light control" has, in the nighttime, the priority "B" higher than "C" of the "wiper control" and, in the daytime, "C" the same as that of the "wiper control". In this manner, a plurality of priority orders may be set in accordance with the traveling scene or traveling conditions, for example.

As described above, the control devices are connected to each other via at least two communication paths. As shown in FIG. 3, which of the communication paths between the control devices is to be used as the main communication path may be determined in advance. FIG. 3 shows the mainly used communication path as the "main route", and a sub-communication path used at a disturbance somewhere in the communication paths, for example, as a "sub-route".

The priority orders are stored in a storage unit (not shown) of the arithmetic unit 100, for example. The storage form of the priority orders is not particularly limited. The priority orders are stored as a table as shown in FIG. 3, for example. The area for storing the priority orders (e.g., as a table) is not limited to the storage unit of the arithmetic unit 100. For example, the priority orders may be stored in each of hubs (not shown) constituting the network in addition to or instead of the arithmetic unit 100 for reference.

### (Control of Traffic)

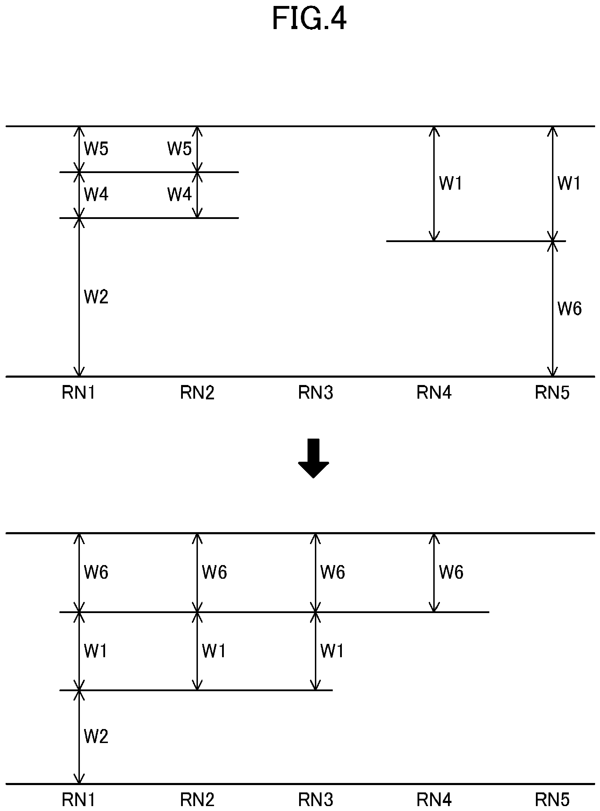

Next, the control of traffic in the on-board network system will be described with reference to FIG. 4. The upper stage of FIG. 4 shows example communication traffic where no communication disturbance occurs in the ring-like on-board network system shown in FIG. 2. The lower stage shows example traffic at a communication disturbance in the communication path RN5 (see the mark x in FIG. 2). W1 to W6 in FIG. 4 correspond to the communication contents in the rows W1 to W6 in FIG. 3. For the sake of simplicity, the same reference characters are assigned to the communication data. The communication path RN5 here corresponds to one of the communication paths.

As shown in the upper stage of FIG. 4, if there is no communication disturbance, transmitted to the communication path RN1 are: communication data W2 between the arithmetic unit 100 and the brake microcomputer 82; communication data W4 between the arithmetic unit 100 and the light control microcomputer 61; and communication data W5 between the arithmetic unit 100 and the wiper control microcomputer 62. Transmitted to the communication path RN2 are: the communication data W4 between the arithmetic unit 100 and the light control microcomputer 61; and the communication data W5 between the arithmetic unit 100 and the wiper control microcomputer 62. Transmitted to the communication path R5 are: communication data W1 between the arithmetic unit 100 and the powertrain ECU 81; and communication data W6 between the arithmetic unit 100 and the EPAS microcomputer 83. Transmitted to the communication path RN4 is the communication data W1 between the arithmetic unit 100 and the powertrain ECU 81. No data is transmitted to the communication path R3.

In the example of FIG. 4, at a communication disturbance in the communication path RN5, the communications (of the communication data W4) between the arithmetic unit 100 and the light control microcomputer 61 and the communications (of the communication data W5) between the arithmetic unit 100 and the wiper control microcomputer 62 are stopped which have relatively low priorities. In addition, the traffic of the communication data W2 between the arithmetic unit 100 and the brake microcomputer 82 is reduced. Accordingly, the communication data W1 between the arithmetic unit 100 and the powertrain ECU 81 and the communication data W6 between the arithmetic unit 100 and the EPAS microcomputer 83 can be transmitted via the other communication path RN1. This reduces the loss of the "cruise control" functions, which are the main functions, at a disturbance of a part of the on-board network.

To sum up, the on-board network system according to the present embodiment includes, as the plurality of control devices, the arithmetic unit 100 and a plurality of microcomputers 61 to 64 and 81 to 83. The plurality of control devices are connected to each other via at least two of the communication paths RN1 to RN8. Set in advance to the communications between each control device and another control device is the priority order according to the communication type. If a communication disturbance is found in one or more of the communication paths RN1 to RN8, each control device adjusts the amount of communication in at least one of the other communication paths in accordance with the priority order.

In this manner, the control devices are connected to each other via at least two of the communication paths RN1 to RN8. Even at a disturbance of one of the communication paths, communications can thus be established via the other communication path. If a communication disturbance is found in one or more of the communication paths, the traffic is adjusted in accordance with the priority order according to the communication type in the other communication path. This reduces the loss of the main functions (e.g., the "cruise control" functions in the embodiment described above).

### INDUSTRIAL APPLICABILITY

The technology disclosed herein is useful as an on-board network system.

### DESCRIPTION OF REFERENCE CHARACTERS

- 100: Arithmetic Unit (Main Arithmetic Unit)
- 61: Light Control Microcomputer (Control Device)
- 62: Wiper Control Microcomputer (Control Device)
- 63: Left Door Control Microcomputer (Control Device)
- 64: Right Door Control Microcomputer (Control Device)
- 81: Powertrain ECU (Control Device, Third Control Device)
- 82: Brake Microcomputer (Control Device, First Control Device)
- 83: EPAS microcomputer (Control Device, Second Control Device)

## Claims

1. An on-board network system comprising:
a main arithmetic unit (100) configured to integrally control a plurality of on-board devices; and
a plurality of control devices (61- 64, 81 - 83) connected to the main arithmetic unit (100) via a communication network (RN), each of the plurality of control devices (61- 64, 81 - 83) receiving information for controlling an on-board device to be controlled by the control device (61- 64, 81 - 83) from the main arithmetic unit (100) via the communication network (RN) and controlling the on-board device based on the information received, wherein
the communication network (RN) includes a ring-like communication path in a ring shape and is configured such that each of the control devices (61- 64, 81 - 83) is communicative with the main arithmetic unit (100) and/or other one(s) of the control devices (61- 64, 81 - 83) via at least two communication paths (RN1 - RN8) of the ring-like network (RN),
in each of the communication paths (RN1 - RN8), a priority order of communications is determined according to a type of communication data, and
the main arithmetic unit (100) or one(s) of the control devices (61- 64, 81 - 83) is configured to adjust traffic of the communication data in other one(s) of the communication paths (RN1 - RN8) in accordance with the priority order of the other one(s) of the communication paths (RN1 - RN8) if a communication disturbance is detected in one of the communication paths (RN1 - RN8),
wherein the plurality of control devices (61- 64, 81 - 83) include: a first control device (61 - 64) for controlling a body-related device and a second control device (61 - 64) on the ring-like communication path, and a third control device (81) that is a powertrain ECU on a branch communication path (RN9) that branches off from the ring-like communication path and merges into the ring-like communication path again, and
if a communication disturbance is detected in the ring-like communication path, traffic of communication data among the first control device, the second control device, and the third control device (61- 64, 81) that is a powertrain ECU is adjusted based on the priority order in the branch communication path (RN9).

2. The on-board network system of claim 1, wherein
each of the plurality of control devices (61- 64, 81 - 83) is configured to reduce the traffic or stop communications of communication data having a priority lower than a predetermined criterion in the other one(s) of the communication paths (RN1 - RN8) if a communication disturbance is detected in the one of the communication paths (RN1 - RN8).

3. The on-board network system of any one of claims 1 or 2, wherein
communication data for cruise control including at least one of braking control, steering control, and driving control of a vehicle has a higher priority, whereas communication data for controlling the body-related device has a lower priority.

4. The on-board network system of any one of claims 1 to 3, wherein
communication data for controlling a drive assist function of a vehicle has a higher priority, whereas communication data for controlling the body-related device has a lower priority.

## Patentansprüche

1. Bordnetzwerksystem, aufweisend:
eine Hauptrecheneinheit (100), die konfiguriert ist, um eine Vielzahl von bordeigenen Vorrichtungen integral zu steuern; und
eine Vielzahl von Steuervorrichtungen (61 - 64, 81 - 83), die mit der Hauptrecheneinheit (100) über ein Kommunikationsnetzwerk (RN) verbunden sind, wobei jede der Vielzahl von Steuereinheiten (61 - 64, 81 - 83) Informationen zum Steuern einer bordeigenen Vorrichtung, die durch die Steuervorrichtung (61 - 64, 81 - 83) von der Hauptrecheneinheit (100) über das Kommunikationsnetzwerk (RN) gesteuert werden soll, sowie zum Steuern der bordeigenen Vorrichtung basierend auf den empfangenen Informationen empfängt, wobei
das Kommunikationsnetzwerk (RN) eine ringartigen Kommunikationspfad in einer Ringform aufweist und derart konfiguriert ist, dass jede der Steuervorrichtungen (61 - 64, 81 - 83) mit der Hauptrecheneinheit (100) und/oder (einer) anderen der Steuervorrichtungen (61 - 64, 81 - 83) über zumindest zwei Kommunikationspfade (RN1 - RN8) des ringartigen Netzwerks (RN) kommunikativ ist,
in jedem der Kommunikationspfade (RN1 - RN8) eine Prioritätsreihenfolge von Kommunikation in Abhängigkeit von einer Art von Kommunikationsdaten bestimmt wird, und
die Hauptrecheneinheit (100) oder eine/einige der Steuervorrichtungen (61 - 64, 81 - 83) konfiguriert ist bzw. sind, um Traffic der Kommunikationsdaten in (einer) anderen der Kommunikationspfade (RN1 - RN8) gemäß der Prioritätsreihenfolge der anderen der Kommunikationspfade (RN1 - RN8) anzupassen, wenn eine Kommunikationsstörung in einem der Kommunikationspfade (RN1 - RN8) detektiert wird,
wobei die Vielzahl von Steuervorrichtungen (61 - 64, 81 - 83) aufweisen: eine erste Steuervorrichtung (61 - 64) zum Steuern einer karosseriebezogenen Vorrichtung und eine zweite Steuervorrichtung (61 - 64) auf dem ringartigen Kommunikationspfad, sowie eine dritte Steuervorrichtung (81), die eine Antriebsstrang-ECU auf einem Zweig-Kommunikationspfad (RN9) ist, der von dem ringartigen Kommunikationspfad abzweigt und sich erneut mit dem ringartigen Kommunikationspfad vereinigt, und
wenn eine Kommunikationsstörung in dem ringartigen Kommunikationspfad detektiert wird, Traffic von Kommunikationsdaten unter der ersten Steuervorrichtung, der zweiten Steuervorrichtung und der dritten Steuervorrichtung (61 - 64, 81), die eine Antriebsstrang-ECU ist, basierend auf der Prioritätsreihenfolge in dem Zweig-Kommunikationspfad (RN9) angepasst wird.

2. Bordnetzwerksystem nach Anspruch 1, wobei
jede der Vielzahl von Steuervorrichtungen (61 - 64, 81 - 83) konfiguriert ist, um den Traffic zu reduzieren oder Kommunikationen von Kommunikationsdaten mit einer Priorität, die geringer als ein vorbestimmtes Kriterium in der/den anderen der Kommunikationspfade (RN1 - RN8) ist, wenn eine Kommunikationsstörung in der einem der Kommunikationspfade (RN1 - RN8) detektiert wird, zu stoppen.

3. Bordnetzwerksystem nach einem der Ansprüche 1 oder 2, wobei
Kommunikationsdaten für einen Temporegler bzw. Abstandsregler, der eine Bremssteuerung und/oder eine Lenksteuerung und/oder Fahrsteuerung eines Fahrzeugs umfasst, eine höhere Priorität aufweisen, wohingegen Kommunikationsdaten zum Steuern der karosseriebezogenen Vorrichtung eine geringere Priorität aufweisen.

4. Bordnetzwerksystem nach einem der Ansprüche 1 bis 3, wobei
Kommunikationsdaten zum Steuern einer Fahrunterstützungsfunktion eines Fahrzeugs eine höhere Priorität aufweisen, wohingegen Kommunikationsdaten zum Steuern der karosseriebezogenen Vorrichtung eine geringere Priorität aufweisen.

## Revendications

1. Système de réseau embarqué comprenant :
une unité arithmétique principale (100) configurée pour commander intégralement une pluralité de dispositifs embarqués ; et
une pluralité de dispositifs de commande (61 - 64, 81 - 83) reliés à l'unité arithmétique principale (100) par l'intermédiaire d'un réseau de communication (RN), chaque dispositif de commande de la pluralité de dispositifs de commande (61 - 64, 81 - 83) recevant des informations pour commander un dispositif embarqué devant être commandé par le dispositif de commande (61 - 64, 81 - 83) de l'unité arithmétique principale (100) par l'intermédiaire du réseau de communication (RN) et pour commander le dispositif embarqué sur la base des informations reçues, dans lequel
le réseau de communication (RN) comporte un trajet de communication de type anneau de forme annulaire et est configuré de telle sorte que chaque dispositif de commande des dispositifs de commande (61 - 64, 81 - 83) est en communication avec l'unité arithmétique principale (100) et/ou un autre/d'autres dispositifs de commande (61 - 64, 81 - 83) par l'intermédiaire d'au moins deux trajets de communication (RN1 - RN8) du réseau de type anneau (RN),
dans chacun des trajets de communication (RN1 - RN8), un ordre de priorité de communications est déterminé conformément à un type de données de communication, et
l'unité arithmétique principale (100) ou un/d'autres dispositifs de commande (61 - 64, 81 - 83) est configurée/configuré/sont configurés pour ajuster le trafic des données de communication dans un autre/dans d'autres trajets de communication (RN1 - RN8) conformément à l'ordre de priorité d'un autre/d'autres trajets de communication (RN1 -RN8) si une perturbation de communication est détectée dans un des trajets de communication (RN1 - RN8),
dans lequel la pluralité de dispositifs de commande (61 - 64, 81 - 83) comportent : un premier dispositif de commande (61 - 64) pour commander un dispositif associé au corps et un deuxième dispositif de commande (61 - 64) sur le trajet de communication de type anneau, et un troisième dispositif de commande (81) qui est une unité de commande électronique (ECU) à chaîne cinématique sur un trajet de communication ramifié (RN9) qui dérive du trajet de communication de type anneau et fusionne à nouveau dans le trajet de communication de type anneau, et
si la perturbation de communication est détectée dans le trajet de communication de type anneau, le trafic de données de communication parmi le premier dispositif de commande, le deuxième dispositif de commande et le troisième dispositif de commande (61 - 64, 81) qui est une ECU à chaîne cinématique est ajusté sur la base de l'ordre de priorité dans le trajet de communication ramifié (RN9).

2. Système de réseau embarqué selon la revendication 1, dans lequel
chaque dispositif de commande de la pluralité de dispositifs de commande (61 - 64, 81 - 83) est configuré pour réduire le trafic ou arrêter des communications de données de communication présentant une priorité inférieure à un critère prédéfini dans l'autre/dans d'autres trajets de communication (RN1 - RN8) si une perturbation de communication est détectée dans l'un des trajets de communication (RN1 - RN8).

3. Système de réseau embarqué selon l'une quelconque des revendications 1 ou 2, dans lequel
les données de communication pour la régulation de vitesse comportant au moins un de la commande de freinage, de la commande de direction et de la commande d'entraînement d'un véhicule présentent une priorité plus élevée, tandis que des données de communication pour commander le dispositif associé au corps présentent une priorité inférieure.

4. Système de réseau embarqué selon l'une quelconque des revendications 1 à 3, dans lequel
des données de communication pour commander une fonction d'aide à la conduite d'un véhicule présentent une priorité plus élevée, tandis que des données de communication pour commander le dispositif associé au corps présentent une priorité inférieure.
